# FASCICULE DE BREVET EUROPEEN

(11) **EP 0 715 884 B1**
(45) Date de publication et mention de la délivrance du brevet: **15.07.1998**
(21) Numéro de dépôt: 95203132.6
(22) Date de dépôt: 16.11.1995
(51) Int. Cl.: B01J 2/30, C05G 3/00

(54) **Procédé de traitement antimottant d'engrais limitant l'émisssion de poussières au stockage**
Antibackverfahren für Dünger mit reduzierten Staubemissionen
Anti-caking treatment for fertilizers in order to avoid dust emissions during storage

(30) Priorité: 24.11.1994 FR 9414088
(43) Date de publication de la demande: 12.06.1996
(73) Titulaire: CECA S.A., 92800 Puteaux (FR)
(72) Inventeur: Navascues, Luc, F-75011 Paris (FR)
(74) Mandataire: Haicour, Philippe

(56) Documents cités:
- EP-A- 0 301 344
- EP-A- 0 389 331
- EP-A- 0 574 306
- FR-A- 2 062 452
- FR-A- 2 460 706

## Description

Le domaine de la présente invention est celui de l'antimottage des engrais composés.

Les engrais granulés ont une fâcheuse tendance à prendre en masse, aussi bien en vrac que conditionnés en sac. Parmi les diverses pratiques pour enrayer ces phénomènes, l'une des plus courantes est le traitement par enrobage avec des compositions pulvérulentes telles que poudre de talc, de craie ou d'argile ou par pulvérisation en mélangeur sur engrais froids ou chauds de compositions fondues à base d'agents antimottants et comportant le cas échéant des huiles, des cires et des poudres minérales. On a expérimenté de très nombreux agents antimottants, parmi lesquels les amines grasses, et plus particulièrement la stéarylamine ou les produits industriels correspondants, les monoamines de suif ou de suif hydrogéné ont rencontré un succès constant.

Les engrais granulés ont un autre inconvénient, celui de générer de la poussière au cours de leur manipulation. On attribue cette poussière, outre la part qui provient de l'engrais qui a échappé à la granulation, voire parfois même des produits pulvérulents utilisés comme antimottants, à l'abrasion ou la décohésion des granulés. Il s'agit d'un processus de formation mécanique banal ; on sait le minimiser en traitant l'engrais avec des produits huileux qui collent cette poussière sur les grains, ou avec des enrobants cireux qui remplissent le même office, qui réduisent aussi la friction entre les grains et donc leur abrasion. Le phénomène que l'on se propose de combattre avec la présente invention est d'une tout autre nature. Il est généralement ignoré de l'homme de l'art. Il se développe avec les engrais ternaires antimottés avec des amines primaires grasses, du fait d'une interaction mal comprise mais réelle, entre l'engrais et l'amine. Il se manifeste avec une intensité d'autant plus grande que la formule et les caractéristiques s'éloignent de celle de simples ammonitrates. La poussière formée dans ces conditions correspond probablement au bris de formations cristallines secondaires fragiles à l'extérieur de l'enveloppe du grain, atmosphère successivement humide et sèche. L'engrais émet ainsi de la poussière au stockage dans des conditions apparemment très paradoxales : atmosphère humide, suite à un traitement fait pour partie pour abattre la poussière qu'il contenait initialement ou qui s'engendrait par action mécanique. La présente invention a pour objet de remédier à cet inconvénient.

Le succès des agents d'antimottage à base d'amines primaires grasses explique la richesse de la littérature à ce sujet. Beaucoup d'amines grasses et beaucoup de formulations de ces amines ont été expérimentées : on a reconnu une activité antimottante convenable, essentiellement aux monoamines saturées dont la longueur de chaîne s'étend en moyenne de C₁₄ à C₂₀, la répartition des chaînes dans les produits bruts ou les mélanges intentionnellement réalisés n'étant pas indifférente (voir par exemple le brevet français n° 89 03727 publié sous le n° FR 2644780). Les monoamines secondaires dialkyles quand elles ont été explorées comme antimottants, accessoirement comme adjuvants antipoussières primaires, ne se sont pas révélées suffisamment efficaces par comparaison avec la stéarylamine très communément utilisée (voir par exemple le brevet français 2062452, Ruhrchemie).

On vient maintenant de trouver que des amines secondaires dialkyles grasses ou des mélanges d'amines grasses secondaires dialkyles et primaires avec chaînes alkyles du suif hydrogéné présentent des propriétés antimottantes très acceptables, mais surtout que les engrais ternaires traités avec ces mélanges ou les compositions antimottantes les contenant, ne généraient que très peu de poussières secondaires au stockage.

Les compositions utilisées comme moyens de l'invention comportent ainsi des monoamines secondaires dialkyles du suif hydrogéné des mélanges de telles monoamines secondaires dialkyles avec des monoamines primaires également du suif hydrogéné dans lesquels le pourcentage pondéral des amines primaires peut atteindre 75%, la teneur pondérale de la composition en monoamines secondaires et primaires étant elle-même comprise entre 5 % et 100 %. Les autres ingrédients possibles de la composition antimottante sont bien connus de l'homme du métier, entre 5 % et 100 %. Les autres ingrédients possibles de la composition antimottante sont bien connus de l'homme du métier, entre autres huiles, cires, poudres minérales, tensioactifs anioniques, en particulier acides gras en C₁₄/C₂₀ et couramment l'acide gras de suif hydrogéné, ingrédients pour l'énoncé général ou particulier desquels on renvoie à la demande européenne EP-A-0389331.

Les compositions selon l'invention sont généralement pâteuses à température ambiante. On les applique après un réchauffement modéré (vers 60-90°C) qui les amène à l'état de liquide à une viscosité suffisamment faible (environ 10 à 20 mPA.s) pour qu'on puisse les pulvériser. L'enrobage de l'engrais se fait selon les pratiques bien connues de l'homme du métier, préférentiellement par pulvérisation au sein d'un malaxeur. Les dosages utiles des mélange d'amines selon l'invention sont compris entre 0,1 et 1 kg par tonne d'engrais.

L'invention s'adresse aux engrais granulés générant de la poussière par l'effet d'un traitement par une amine grasse, et en particulier aux engrais composés, qui contiennent au moins deux des trois éléments fertilisants essentiels, l'azote (N), le phosphore, exprimé en anhydride phosphorique (P₂O₅), et le potassium exprimé en oxyde de potassium (K₂O). Sont ainsi susceptibles du traitement selon l'invention, les engrais ternaires (NPK) classiques, comme les 15-15-15, 17-17-17, 13-13-21, les formules en "V" comme les 22-2-12, 14-8-22, 15-7-24, ou les engrais binaires (NP) comme les 15-30.

Les exemples qui suivent, qui ne sont pas limitatifs, feront mieux comprendre l'invention.

On y a apprécié le mottage de l'engrais selon un mode d'essai en laboratoire qui consiste à conditionner les granulés d'engrais à leur humidité relative critique pendant des durées variables, puis à en former par compression statique des éprouvettes cylindriques dont on mesure le niveau de cohésion correspondant à une densité apparente donnée. Le test se trouve décrit dans la demande de brevet européen EP-A-0389331.

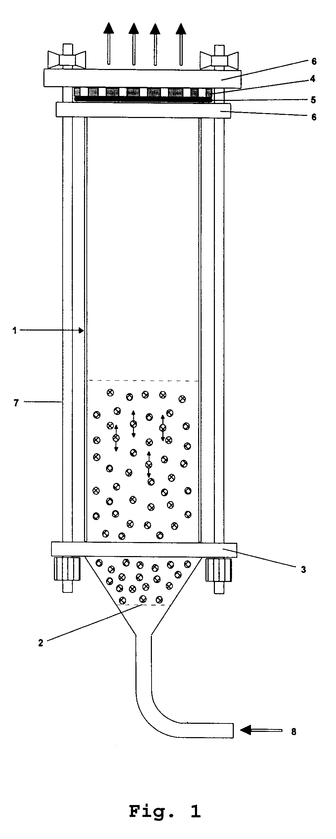

On y a dosé la poussière contenue dans un engrais granulé selon le test suivant. Les grains d'engrais sont placés dans une colonne de verre et y sont soumis à un courant d'air ascendant. Les poussières entraînées par le flux gazeux sont retenues sur un filtre en papier, lequel est pesé avant et après soufflage. L'appareillage (fig.1) est constitué par un manchon de verre ①, cylindre de 30 cm de haut, de diamètre intérieur 9 cm, emboîté sur un fond conique muni d'une grille ② et se terminant par un ajutage d'admission d'air comprimé, coiffé d'un disque perforé ④ porteur d'un disque de papier filtre ⑤, le tout maintenu par des brides ③ et ⑥ au moyen de tiges filetées à vis papillon ⑦. Le système est alimenté en air comprimé en ⑧. La prise d'essai est de 100 grammes. Le papier filtre est de qualité filtration ultra-rapide sans cendres. Le débit d'air sec est réglé par manomètre de façon à obtenir la fluidisation du lit d'engrais sur une hauteur d'environ 10 cm. Le temps de soufflage est de 4 minutes. On exprime le taux de poussières en mg/100 g d'engrais par la différence de poids du filtre après et avant soufflage. On fait en général deux déterminations, dont on prend la moyenne. Dans le cas contraire, on fait une troisième détermination pour obtenir une meilleure moyenne. L'expérience du test et de sa correspondance avec l'empoussièrement sur le terrain conduit à rejeter les engrais donnant plus de 50 mg de poussières pour 100 grammes de granulés. On met en évidence la tendance de l'engrais à émettre de la poussière au stockage en appliquant cette mesure à des granulés exposés au repos à une atmosphère suffisamment humide et chaude.

### Exemple 1

Un engrais granulé NPK 17-17-17 a été traité par des solutions d'amines à 20% en poids dans une huile (Prorex® RPO de Mobil). Les résultats de mottage et de poussières figurent au tableau ci-après. Les amines sont le Noram® SH de CECA S.A., une monoamine primaire de suif hydrogéné, le Noram® 2SH de CECA S.A., une monoamine secondaire de suif hydrogéné (respectivement rapportées sous les abréviations NSH et N2SH dans le tableau ci-dessous), soit un mélange 50/50 des deux précédentes. Ces amines sont des composés représentables respectivement par les formules RNH2 et R₂NH, la chaîne R étant une chaîne alkyle saturée de suif hydrogéné comptant 30% de C16 et 65% de C18. Les dosages indiqués sont donnés en kilo de composition huileuse par tonne d'engrais.

Les résultats de mottage sont exprimés en pourcentage de protection par rapport au témoin, pour un engrais conditionné à 78% d'humidité relative, à 20°C, sous compression statique de 7,5 bars pendant 16 heures.

Les résultats de poussières sont exprimés en mg de poussières par 100 g d'engrais, en (1) sur l'engrais tel quel, en (2) sur l'engrais après maintien à 50°C et à 50% d'humidité relative pendant 30 minutes. On notera que les conditions expérimentales (2) excitent très fortement l'émission secondaire de poussières par l'engrais.

| | Témoin non enrobé | Engrais enrobé avec : | | | | | |
|---|---|---|---|---|---|---|---|
| | | NSH | NSH | N2SH | N2SH | NSH/N2SH | NSH/N2SH |
| Dosage Kg/t | | 0,75 | 1,5 | 0,75 | 1,5 | 0,75 | 1,5 |
| Mottage (prot%) | 0 | 70 | 75 | 55 | 75 | 75 | 80 |
| Poussière (1) | 25 | 5 | 10 | 0 | 5 | 0 | 5 |
| Poussière (2) | 80 | 160 | 200 | 30 | 35 | 40 | 45 |

| | | | | | | | |
|---|---|---|---|---|---|---|---|
| (1) engrais tel quel. | | | | | | | |
| (2) engrais après maintien à 50°C et à 50% d'humidité | | | | | | | |

Contre exemple 1'

On compare ici l'effet de la composition classique à base de stéarylamine à celle d'une composition à base d'une autre monoamine, l'isotridécylamine (ITDA), que la littérature présente comme efficace pour éviter de la prise en masse de l'engrais et la formation de poussière.

| | Témoin | Engrais enrobé avec : | | | |
|---|---|---|---|---|---|
| | | NSH | NSH | ITDA | ITDA |
| Dosage Kg/t | - | 0,75 | 1,5 | 0,75 | 1,5 |
| Mottage (prot%) | 0 | 70 | 75 | 70 | 75 |
| Poussière(1) | 25 | 5 | 10 | 5 | 10 |
| Poussière(2) | 80 | 160 | 200 | 150 | 180 |

| | | | | | |
|---|---|---|---|---|---|
| (1) engrais tel quel. | | | | | |
| (2) engrais après maintien à 50°C et à 50% d'humidité | | | | | |

relative pendant 30 minutes.

Le test confirme que des amines réputées efficaces pour conserver l'indépendance des grains d'engrais et pour en abattre la poussière ne sont pas nécessairement des remèdes à la formation de poussière secondaire ; dans le cas de l'exemple, elles contribuent même largement à son développement.

### Exemple 2

On applique à divers engrais granulés une composition de référence C1 à base d'amine primaire comprenant 10% de monoamine primaire, 5% d'acide gras de suif hydrogéné, 5% de cire paraffinique, 80% d'huile (Mobil Prorex RPO), et une composition C2 selon l'invention comprenant 5% de monoamine primaire de suif hydrogéné, 5% de monoamine secondaire dialkyle de suif hydrogéné, 5% d'acide gras de suif hydrogéné, 5% de cire paraffinique, 80% d'huile (Mobil Prorex RPO), les amines étant les mêmes que celles de l'exemple 1. Les dosages utilisés ont été de 1,5 kg des compositions C1 ou C2 par tonne d'engrais. Le tableau ci-dessous rassemble les résultats d'essais de mottage et de poussières obtenus sur engrais traités, tant en laboratoire qu'en usine. En laboratoire, on procède par enrobage sur un tambour enrobeur de laboratoire et on détermine les poussières 24 heures après l'enrobage après conditionnement de l'engrais 30 minutes à 50°C en enceinte climatique à humidité contrôlée à 50% d'humidité relative. En usine, on procède à l'enrobage sur tambour industriel et on détermine les poussières à réception de l'engrais au laboratoire et sur l'engrais après stockage sur site pendant deux mois.

On obtient les résultats suivants :

| Engrais NPK | Antimottage (% de protection) | | Poussières (mg/100g) | |
|---|---|---|---|---|
| | C1 | C2 | C1 | C2 |
| Essais de laboratoire | | | | |
| 15.15.15 | 65 | 60 | 60 | 10 |
| 15.07.24 | 50 | 50 | 170 | 50 |
| 18.06.5 | 60 | 65 | 80 | 50 |

| Essais Industriels | | | | |
|---|---|---|---|---|
| 13.13.21 | 90 | 90 | 20 35 (¹) | 0 5 (¹) |
| 8.24.16 | 90 | 90 | 20 60 (¹) | 15 30 (¹) |
| 18.6.5 | 70 | 70 | 30 150 (¹) | 15 30 (¹) |

| | | | | |
|---|---|---|---|---|
| (¹) Test poussières effectué sur engrais âgé de 2 mois | | | | |

## Revendications

1. Utilisation de compositions comportant des amines grasses à chaînes alkyles de suif hydrogéné, et éventuellement des huiles, des cires, des poudres minérales, des tensioactifs anioniques, et autres ingrédients de formulation, pour l'enrobage d'engrais ternaires granulaires afin d'en limiter à la fois la tendance au mottage et la tendance à l'émission de poussières au stockage, caractérisée en ce que lesdites amines grasses de suif hydrogéné sont constituées de monoamines secondaires dialkyles ou de mélanges de monoamines secondaires dialkyles avec monoamines primaires dans lesquels la proportion pondérale d'amines primaires est au maximum de 75%.

2. Utilisation de compositions de traitement d'engrais ternaires selon la revendication 1 caractérisée en ce que la teneur pondérale de ces compositions en monoamines primaires et secondaires est comprise entre 5 % et 100 %.

3. Utilisation de compositions de traitement d'engrais ternaires selon la revendication 1 caractérisée en ce que ces compositions comportent à titre de composant anionique, des acides gras, préférentiellement des acides gras de suif hydrogéné.

## Claims

1. Use of compositions containing fatty amines containing hydrogenated tallow alkyl chains, and optionally oils, waxes inorganic powders, anionic surfactants and other formulation ingredients, for coating granular ternary fertilizers in order to limit both the tendency thereof towards caking and the tendency thereof towards giving off duct on storage, characterized in that the said hydrogenated tallow fatty amines consist of secondary dialkyl monoamines or of mixtures of secondary dialkyl monoamines with primary monoamines in which the proportion by weight of primary amines is at most 75%.

2. Use of compositions for the treatment of ternary fertilizers according to Claim 1, characterized in that the content by weight in these compositions of primary and secondary monoamines is between 5% and 100%.

3. Use of compositions for the treatment of ternary fertilizers according to Claim 1, characterized in that these compositions contain, as anionic component, fatty acids and preferentially hydrogenated tallow fatty acids.

## Patentansprüche

1. Verwendung von Zusammensetzungen, die Fettamine mit Alkylketten von hydriertem Talg und gegebenerfalls Öle, Wachse, anorganische Pulver, anionische Tenside und weitere Formulierungsbestandteile enthalten, zum Umhüllen von granulatartigen Dreistoffdüngemitteln zwecks gleichzeitiger Reduzierung der Klumpenbildungsneigung sowie der Neigung, bei der Lagerung Staub freizusetzen, dadurch gekennzeichnet, daß die Fettamine von hydriertem Talg aus sekundären Dialkylmonoaminen oder Mischungen sekundärer Dialkylmonoamine mit primären Monoaminen bestehen, in denen die gewichtsbezogene Menge an primären Aminen höchstens 75 % beträgt.

2. Verwendung von Zusammensetzungen zur Behandlung von Dreistoffdüngemitteln nach Anspruch 1, dadurch gekennzeichnet, daß der Gewichtsgehalt dieser Zusammensetzungen an primären und sekundären Monoaminen zwischen 5 % und 100 % liegt.

3. Verwendung von Zusammensetzungen zur Behandlung von Dreistoffdüngemitteln nach Anspruch 1, dadurch gekennzeichnet, daß die Zusammensetzungen als anionischen Bestandteil Fettsäuren enthalten, vorzugsweise Fettsäuren von hydriertem Talg.
